# EUROPEAN PATENT APPLICATION

(11) **EP 4 250 406 A1**
(43) Date of publication of application: **27.09.2023**
(21) Application number: 22871551.2
(22) Date of filing: 05.07.2022
(51) Int. Cl.: H01M 4/66

(54) **ELECTRODE ASSEMBLY AND MANUFACTURING METHOD AND SYSTEM, BATTERY CELL, BATTERY, AND POWER UTILIZATION APPARATUS**

(30) Priority: 27.09.2021 CN 202111138978
(71) Applicant: Contemporary Amperex Technology Co., Limited, Ningde, Fujian 352100 (CN)
(72) Inventor: WU, Lili, Ningde, Fujian 352100 (CN); CHEN, Xingbu, Ningde, Fujian 352100 (CN); LI, Xuan, Ningde, Fujian 352100 (CN); WEI, Jianren, Ningde, Fujian 352100 (CN); SU, Huisen, Ningde, Fujian 352100 (CN); SUN, Xin, Ningde, Fujian 352100 (CN)
(74) Representative: Gong, Jinping
(86) International application number: PCT/CN2022/103972
(87) International publication number: WO 2023/045490

(57) **Abstract**

This application relates to an electrode assembly, a method and system for manufacturing the same, a battery cell, a battery, and an electric apparatus. The electrode assembly includes an electrode member, the electrode member includes an electrode member wound along a winding direction, the electrode member includes an electrode body, and the electrode body includes an insulating matrix and a conductive layer disposed on the insulating matrix; and the conductive layer includes a first part coated with an active substance layer and a second part coated with no active substance layer; the second part is provided in a quantity of N, and the N second parts are spaced apart in the winding direction; and in the winding direction, distance between the M^{th} and (M-1)^{th} second parts is L1, and distance between the M^{th} and (M+1)^{th} second parts is L2, where both N and M are positive integers, 2 ≤ M ≤ N-1, and 0.95 < L2/L1 < 1.05. This application can improve the current flow capacity and safety performance of electrode assemblies.

## Description

### CROSS-REFERENCE TO RELATED APPLICATIONS

This application claims priority to Chinese Patent Application No. 202111138978.0, filed on September 27, 2021 and entitled "ELECTRODE ASSEMBLY, METHOD AND SYSTEM FOR MANUFACTURING SAME, BATTERY CELL, BATTERY, AND ELECTRIC APPARATUS", which is incorporated herein by reference in its entirety.

### TECHNICAL FIELD

This application relates to the technical field of battery manufacture, and in particular, to an electrode assembly, a manufacturing method and system for manufacturing the same, a battery cell, a battery, and an electric apparatus.

### BACKGROUND

Battery cells are widely used in electronic devices such as mobile phones, laptops, battery carts, electric vehicles, electric aircraft, electric ships, electric toy cars, electric toy ships, electric toy aircraft, and electric tools. Battery cells may include nickel-cadmium battery cells, nickel-hydrogen battery cells, lithium-ion battery cells, secondary alkaline zinc-manganese battery cells, and the like. The battery cell includes an electrode assembly. Ion migration occurs in the electrode assembly to generate currents which are then gathered and outputted.

In the development of battery technologies, how performance of battery assemblies is improved is an urgent technical problem to be resolved in battery technology.

### SUMMARY

This application provides an electrode assembly, a method and system for manufacturing the same, a battery cell, a battery, and an electric apparatus, which can improve performance of electrode assemblies.

According to a first aspect, this application provides an electrode assembly including an electrode member wound along a winding direction, where the electrode member includes an electrode body, and the electrode body includes an insulating matrix and a conductive layer disposed on the insulating matrix; and the conductive layer includes a first part coated with an active substance layer and a second part coated with no active substance layer; the second part is provided in a quantity of N, and the N second parts are spaced apart in the winding direction; and in the winding direction, distance between the M^{th} and (M-1)^{th} second parts is L1, and distance between the M^{th} and (M+1)^{th} second parts is L2, where both N and M are positive integers, 2≤M≤N-1, and 0.95<L2/L1<1.05.

In the foregoing technical solution, in the winding direction, the distance between the M^{th} and (M-1)^{th} second parts is L1, and the distance between the M^{th} and (M+1)^{th} second parts is L2, where 0.95<L2/L1<1.05. During the charging/discharging process of the battery cell, when the active substance layer shrinks or swells, because of the small difference between L1 and L2, forces applied by the insulating matrix on two sides of the second part are substantially the same, resulting in relatively balanced forces on the second part. This can ensure connection stability between the first part and the second part, improve structural stability of the electrode assembly, and improve the current flow capacity and safety performance of the electrode assembly.

In some embodiments, the second part includes a first conductive portion and a second conductive portion, where the first conductive portion is disposed between the second conductive portion and the first part, and in the winding direction, the first conductive portion is larger than the second conductive portion in size. In this embodiment of this application, the size of the first conductive portion in the winding direction is greater than the size of the second conductive portion in the winding direction, so as to increase the connection area between the first part and the second part, thereby improving the connection strength of the first part and the second part, structural stability of the battery cell, and reliability of the battery cell. In addition, because of the small thickness of the conductive layer, the current flow area of the first part and the second part is small, which may lead to severe heat generation in this region and seriously reduce performance of the battery cell. Increasing the size of the first conductive portion in the winding direction can increase the current flow area of the conductive layer at a joint of the first part and the second part, thus alleviating the heat generation in this region during usage of the electrode assembly and further improving the current flow capacity and safety performance of the electrode assembly.

In some embodiments, in the winding direction, the first conductive portion shows a gradient increase in width. In this embodiment of this application, the second part shows a regular change, facilitating processing and production.

In some embodiments, the electrode member is wound into a plurality of turns, at least one second part being disposed on each turn. In this embodiment of this application, the second part is disposed on each turn, and the second part is connected to the conductive structure, so that the accommodation space of the battery cell can be effectively utilized.

In some embodiments, two second parts are disposed on each turn of the electrode member, and the two second parts are respectively disposed on two sides of a winding axis of the electrode member. In this embodiment of this application, two second parts are disposed on each turn, and the second part is configured to be connected to the conductive structure, which can effectively improve overall conductivity of the conductive structure.

In some embodiments, the electrode member includes a conductive structure connected to the second part, any one of N second parts is connected to two conductive structures, 2N conductive structures are disposed, and projections of the 2N conductive structures at least partially overlap in a direction perpendicular to the winding axis of the electrode member. In this embodiment of this application, the 2N conductive structures are stacked and then connected to each other, which can improve the current flow capacity of the conductive structures.

In some embodiments, the first part includes a connection portion and a transition portion, where the transition portion is located on two sides of the connection portion, the connection portion is formed by extending in a width direction of the conductive structure, and at least part of the transition portion is arc-shaped; and the second part is disposed on the connection portion and extends in the width direction of the conductive structure.

In this embodiment of this application, the second part is disposed on the connection portion, which can ensure that the conductive structures connected to the second part can be effectively welded when being stacked and connected, improving the bonding force between adjacent conductive structures. The contact area between adjacent conductive structures is increased, which can improve the current flow capacity.

In some embodiments, the connection portion includes a first connection portion and a second connection portion disposed opposite each other, where the first connection portion and the second connection portion are respectively disposed on two sides of the winding axis of the electrode member; and the second part is disposed on the first connection portion and/or the second connection portion.

In this embodiment of this application, when the second part is disposed on the first connection portion or the second connection portion, a relatively small number of conductive structures are connected to the second part, which can reduce thickness of the plurality of stacked conductive structures, thereby increasing energy density of the battery cell. When the second part is disposed on the first connection portion and the second connection portion, the conductive structures connected to the second part are also disposed on the first connection portion and the second connection portion. The increased number of conductive structures can effectively improve overall conductivity of the plurality of conductive structures.

According to a second aspect, an embodiment of this application provides a battery cell including the electrode assembly according to any one of the embodiments of the first aspect and a housing for accommodating the electrode assembly.

According to a third aspect, an embodiment of this application provides a battery including a plurality of battery cells according to the embodiment of the second aspect.

According to a fourth aspect, an embodiment of this application provides an electric apparatus including a battery according to the embodiment of the third aspect, where the battery is configured to supply electric energy.

According to a fifth aspect, an embodiment of this application provides a method for manufacturing electrode assembly, including: providing an electrode body, where the electrode body includes an insulating matrix and a conductive layer disposed on the insulating matrix, and the conductive layer includes a first part and a second part; and winding the electrode body along a winding direction, where the second part is provided in a quantity of N, and the N second parts are spaced apart in the winding direction, distance between the M^{th} and (M-1)^{th} second parts is L1, and distance between the M^{th} and (M+1)^{th} second parts is L2, where both N and M are positive integers, 2≤M≤N-1, and 0.95<L2/L1<1.05.

According to a sixth aspect, an embodiment of this application provides a system for manufacturing electrode assembly, including: a first providing apparatus, configured to provide an electrode body, where the electrode body includes an insulating matrix and a conductive layer disposed on a surface of the insulating matrix, and the conductive layer includes a first part and a second part; and a winding apparatus, configured to wind the electrode body along a winding direction, where the second part is provided in a quantity of N, and the N second parts are spaced apart in the winding direction, distance between the M^{th} and (M-1)^{th} second parts is L1, and a distance between the M^{th} and (M+1)^{th} second parts is L2, where both N and M are positive integers, 2≤M≤N-1, and 0.95<L2/L1<1.05.

### BRIEF DESCRIPTION OF DRAWINGS

The following describes features, advantages, and technical effects of the example embodiments of this application with reference to the accompanying drawings.
FIG. 1 is a schematic structural diagram of a vehicle according to some embodiments of this application;
FIG. 2 is a schematic structural exploded view of a battery according to some embodiments of this application;
FIG. 3 is a schematic structural diagram of a battery module shown in FIG. 2;
FIG. 4 is a schematic structural exploded view of a battery cell according to some embodiments of this application;
FIG. 5 is a schematic diagram of a cross section of an electrode assembly according to some embodiments of this application;
FIG. 6 is a schematic structural diagram of an electrode assembly with an electrode member wound according to some embodiments of this application;
FIG. 7 is a schematic structural diagram of an electrode assembly with an electrode member in an unfolded state according to some embodiments of this application;
FIG. 8 is a cross-sectional diagram of an electrode member shown in FIG. 7 along line A-A;
FIG. 9 is a schematic flowchart of a method for manufacturing electrode assembly according to some embodiments of this application; and
FIG. 10 is a schematic block diagram of a system for manufacturing electrode assembly according to some embodiments of this application.

In the accompanying drawings, the figures are not drawn to scale.

Reference signs in the figure:
1. vehicle; 2. battery; 3. controller; 4. motor; 5. box; 51. first box portion; 52. second box portion; 53. accommodating space; 6. battery module; 7. battery cell; 10. electrode assembly; 11. separator; 13. current collecting member; 20. housing assembly; 21. housing; 22. cover assembly; 221. electrode terminal; 223. end cover;
8. electrode member;
9. electrode body; 91. insulating matrix; 92. conductive layer; 921. first part; 9211. connection portion; 9211a. first connection portion; 9211b. second connection portion; 9212. transition portion; 922. second part; 9221. first conductive portion; 9222. second conductive portion;
93. active substance layer;
12. conductive structure; and
1000. manufacturing system; 100. first providing apparatus; and 200. winding apparatus.

### DESCRIPTION OF EMBODIMENTS

The following further describes implementations of this application in detail with reference to accompanying drawings and embodiments. The detailed description of the following embodiments and the accompanying drawings are used to exemplarily illustrate the principle of this application, but cannot be used to limit the scope of this application, that is, this application is not limited to the described embodiments.

To make the objectives, technical solutions, and advantages of the embodiments of this application clearer, the following clearly describes the technical solutions in the embodiments of this application with reference to the accompanying drawings in the embodiments of this application. Apparently, the embodiments described are some rather than all embodiments of this application. All other embodiments obtained by a person of ordinary skill in the art based on the embodiments of this application without creative efforts shall fall within the protection scope of this application.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection, and may refer to a direct connection, an indirect connection via an intermediate medium, or an internal communication between two elements. A person of ordinary skill in the art can understand specific meanings of these terms in this application based on specific situations.

The term "and/or" in this application is only an associative relationship for describing associated objects, indicating that three relationships may be present. For example, A and/or B may indicate three cases: presence of only A; presence of both A and B; and presence of only B. In addition, the character "/" in this application generally indicates an "or" relationship between the associated objects.

In the embodiments of this application, the same reference signs denote the same members. For brevity, in different embodiments, detailed descriptions of the same members are not repeated. It should be understood that, as shown in the accompanying drawings, sizes such as thickness, length, and width of various components and sizes such as thickness, length, and width of integrated devices in the embodiments of this application are merely for illustrative purposes and should not constitute any limitations on this application.

In this application, "a plurality of" means more than two (inclusive).

The battery cell in the application may include a lithium-ion secondary battery cell, a lithium-ion primary battery cell, a lithium-sulfur battery cell, a sodium-lithium-ion battery cell, a sodium-ion battery cell, a magnesium-ion battery cell, or the like. This is not limited in the embodiments of this application. The battery cell may be cylindrical, flat, cuboid, or of other shapes, which is not limited in the embodiments of this application either. Battery cells are typically divided into the following several types by packaging methods: cylindrical battery cell, prismatic battery cell, and the like. The type of battery is not limited in the embodiments of this application either.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent liquids or other foreign matter from affecting charging or discharging of the battery cell.

The battery cell includes an electrode assembly and an electrolyte, and the electrode assembly includes a first electrode member, a second electrode member, and a separator sandwiched between the first electrode member and the second electrode member. The electrode assembly is obtained by winding the first electrode member, the separator, and the second electrode member together. The first electrode member and the second electrode member have opposite polarities. For example, the first electrode member is a positive electrode member, and correspondingly, the second electrode member is a negative electrode member. Certainly, the first electrode member may be a negative electrode member, and correspondingly, the second electrode member may be a positive electrode member. Working of the battery cell mainly relies on migration of metal ions between the first electrode member and the second electrode member. A material of the separator may be PP (polypropylene, polypropylene), PE (polyethylene, polyethylene), or the like.

The positive electrode member includes a positive electrode body and a positive electrode conductive structure. The positive electrode body is a stacked structure, including an insulating matrix and a positive electrode conductive layer disposed on the surface of the insulating matrix. A part of the positive electrode conductive layer is coated with a positive electrode active substance layer, and the positive electrode conductive structure is coated with no positive electrode active substance layer. Using a lithium-ion battery as an example, its positive electrode conductive layer may be made of aluminum, and its positive electrode active substance layer includes a positive electrode active substance which may be lithium cobaltate, lithium iron phosphate, ternary lithium, lithium manganate, or the like. The negative electrode member includes a negative electrode body and a negative electrode conductive structure. The negative electrode body is a stacked structure, including an insulating matrix and a negative electrode conductive layer disposed on the surface of the insulating matrix. A part of the negative electrode conductive layer is coated with a negative electrode active substance layer, and the negative electrode conductive structure is coated with no negative electrode active substance layer. The negative electrode conductive layer may be made of copper, and the negative electrode active substance layer includes a negative electrode active substance which may be carbon, silicon, or the like. To allow a large current to pass through without any fusing, a plurality of positive electrode conductive structures are provided and stacked together, and a plurality of negative electrode conductive structures are provided and stacked together.

The battery cell may further include a housing assembly. The housing assembly has an accommodating cavity inside. The accommodating cavity is an enclosed space provided by the housing assembly for the electrode assembly and the electrolyte. The housing assembly includes a housing and a cover assembly, the housing is a hollow structure with an opening on one side, the cover assembly covers the opening of the housing to form hermetical connection so as to form an accommodating cavity for accommodating the electrode assembly and the electrolyte.

For the development of battery technology, many design factors need to be considered, for example, performance parameters such as energy density, cycle life, discharge capacity, and charge and discharge rate, as well as safety of the battery cell.

The inventors have found that in a charging/discharging process of the battery cell, the active substance layer of the electrode assembly of the battery cell shrinks or swells. Because the insulating matrix is typically made of an organic polymer material, the insulating matrix has a good ductility. The conductive structure is typically made of a metal material and has a lower ductility than the insulating matrix, and the conductive structure is less ductile. Due to the ductility difference between the insulating matrix and the conductive structure, when the active substance layer shrinks or swells, the insulating matrix applies forces on the conductive structure. When the forces on two sides of the conductive structure vary, it is probable that the conductive structure is torn or the insulating matrix is wrinkled. The tearing of the conductive structure may lead to at least partial fracture between the conductive structure and the conductive layer, making it more difficult for the conductive structure to output currents generated by the electrode assembly, and resulting in a poor current flow capacity for the electrode assembly. In addition, the tearing of the conductive structure may cause the separator to be pierced and the positive and negative electrodes to be connected, bringing safety risks. Wrinkles in the insulating matrix cause the bonding force between the insulating matrix and the conductive layer to drop, thus decreasing the current flow capacity of the electrode assembly.

In view of this, the inventors have proposed a technical solution. In the technical solution, the electrode assembly includes an electrode member, the electrode member includes an electrode body and a conductive structure, the electrode body includes an insulating matrix and a conductive layer disposed on a surface of the insulating matrix, the conductive layer includes a first part and a second part extending from the first part, the first part is coated with an active substance layer, the second part is coated with no active substance layer, and the second part is connected to the conductive structure; the second part is provided in a quantity of N, the electrode member is wound along a winding direction, and the N second parts are spaced apart in the winding direction; and in the winding direction, distance between the M^{th} and (M-1)^{th} second parts is L1, and distance between the M^{th} and (M+1)^{th} second parts is L2, where both N and M are positive integers, 2 ≤ M ≤ N-1, and 0.95 < L2/L1 < 1.05. For the electrode assembly with such structure, during the charging/discharging process of the battery cell, forces on two sides of the second part are substantially the same. Because the second parts are connected to the conductive structure and stacked, forces on two sides of the conductive structure are substantially the same, which can effectively prevent tearing of the conductive structure or wrinkles of the insulating matrix, and ensure a stable structure of the electrode assembly, thereby improving the safety performance and current flow capacity of the electrode assembly.

The technical solution described in the embodiments of this application is applicable to batteries and electric apparatuses using a battery.

The electric apparatus may be vehicles, mobile phones, portable devices, notebook computers, ships, spacecrafts, electric toys, electric tools, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, and an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric apparatus.

For ease of description, the electric apparatus being a vehicle is used as example for description of the following embodiments.

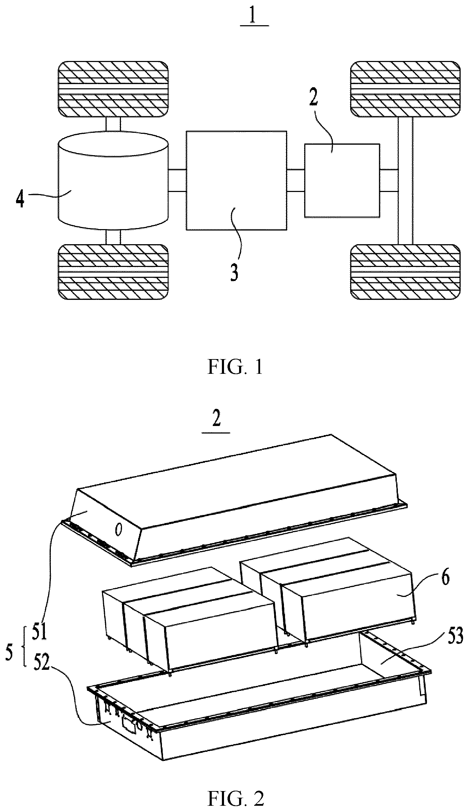

FIG. 1 is a schematic structural diagram of a vehicle according to some embodiments of this application. As shown in FIG. 1, the vehicle 1 is provided with a battery 2 inside, and the battery 2 may be disposed at the bottom or in the front or at the rear of the vehicle 1. The battery 2 may be configured to supply power to the vehicle 1. For example, the battery 2 may be used as an operational power source for the vehicle 1.

The vehicle 1 may further include a controller 3 and a motor 4, where the controller 3 is configured to control the battery 2 to supply power to the motor 4, for example, to satisfy power needs of start, navigation, and driving of the vehicle 1.

In some embodiments of this application, the battery 2 can be used as not only the operational power source for the vehicle 1 but also a driving power source for the vehicle 1, replacing or partially replacing fossil fuel or natural gas to provide driving traction for the vehicle 1.

FIG. 2 is a schematic structural exploded view of a battery according to some embodiments of this application. As shown in FIG. 2, the battery 2 includes a box 5 and a battery cell (not shown in FIG. 2), and the battery cell is accommodated in the box 5.

The box 5 is configured to accommodate the battery cell, and the box 5 may be of various structures. In some embodiments, the box 5 may include a first box portion 51 and a second box portion 52, the first box portion 51 and the second box portion 52 fit together to jointly define an accommodating space 53 for accommodating the battery cell. The second box portion 52 may be a hollow structure with an opening formed at an end. The first box portion 51 is a plate-like structure. The first box portion 51 covers an opening side of the second box portion 52 so as to form the box 5 having the accommodating space 53; or the first box portion 51 and the second box portion 52 may each be a hollow structure with an opening formed at an end, and the opening side of the first box portion 51 is engaged with the opening side of the second box portion 52 so as to form the box 5 having the accommodating space 53. Certainly, the first box portion 51 and the second box portion 52 may be of various shapes, such as cylindrical and cuboid.

To improve sealing performance after the first box portion 51 and the second box portion 52 are connected, a sealing element such as sealant or a sealing ring may also be provided between the first box portion 51 and the second box portion 52.

Assuming that the first box portion 51 fits on the top of the second box portion 52, the first box portion 51 may also be referred to as an upper box cover, and the second box portion 52 may also be referred to as a lower box.

In the battery 2, there may be one or more battery cells. Under the condition that a plurality of battery cells are provided, the plurality of battery cells may be connected in series, parallel, or series-parallel, where being connected in series-parallel means a combination of series and parallel connections of the plurality of battery cells. The plurality of battery cells may be directly connected in series, parallel, or series-parallel, and then an entirety of the plurality of battery cells is accommodated in the box 5; or certainly, the battery may be formed by a plurality of battery cells being connected in series, parallel, or series-parallel first to form a battery module 6 and then a plurality of battery modules 6 being connected in series, parallel, or series-parallel to form an entirety which is accommodated in the box 5.

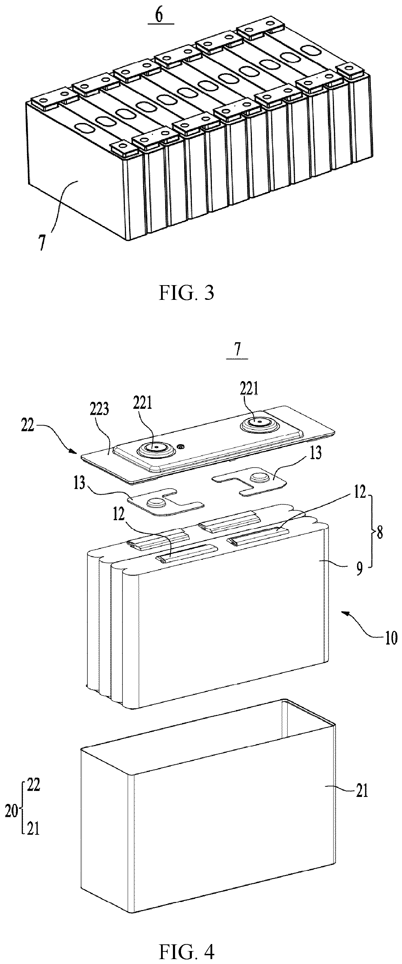

FIG. 3 is a schematic structural diagram of a battery module shown in FIG. 2. As shown in FIG. 3, in some embodiments, there are a plurality of battery cells 7, and the plurality of battery cells 7 are connected in series, parallel, or series-parallel to form a battery module 6. A plurality of battery modules 6 are then connected in series, parallel, or series-parallel to form an entirety which is accommodated in the box.

The plurality of battery cells 7 in the battery module 6 may be electrically connected via a busbar, so that the plurality of battery cells 7 in the battery module 6 are connected in series, parallel, or series-parallel.

FIG. 4 is a schematic structural exploded view of a battery cell according to some embodiments of this application. As shown in FIG. 4, the battery cell 7 provided in the embodiments of this application includes an electrode assembly 10 and a housing assembly 20, and the electrode assembly 10 is accommodated in the housing assembly 20.

In some embodiments, the housing assembly 20 may also be configured to accommodate an electrolyte, for example, a liquid electrolyte. The housing assembly 20 may be of various structure forms.

In some embodiments, the housing assembly 20 may include a housing 21 and a cover assembly 22, where the housing 21 is a hollow structure with an opening on one side, the cover assembly 22 covers the opening of the housing 21 to form hermetical connection so as to form an accommodating cavity for accommodating the electrode assembly 10 and the electrolyte.

The housing 21 may be of various shapes, such as cylindrical and cuboid. The shape of the housing 21 may be determined based on a specific shape of the electrode assembly 10. For example, if the electrode assembly 10 is a cylindrical structure, a cylindrical housing may be selected; or if the electrode assembly 10 is a cuboid structure, a cuboid housing may be selected.

In some embodiments, the cover assembly 22 includes an end cover 223, and the end cover 223 covers the opening of the housing 21. The end cover 223 may be of various structures, for example, the end cover 223 is a plate-like structure, a hollow structure with an opening on one end, or the like. For example, in FIG. 4, the housing 21 is a cuboid structure, the end cover 223 is a plate-like structure, and the end cover 223 covers the opening on the top of the housing 21.

The end cover 223 may be made of an insulating material (for example, plastic) or a conductive material (for example, metal). With the end cover 223 made of a metal material, the cover assembly 22 may further include an insulator, where the insulator is located on a side of the end cover 223 facing the electrode assembly 10 to insulate the end cover 223 from the electrode assembly 10.

In some embodiments, the cover assembly 22 may further include electrode terminals 221, and the electrode terminals 221 are mounted to the end cover 223. Two electrode terminals 221 are provided and defined as a positive electrode terminal and a negative electrode terminal, respectively. Both the positive electrode terminal and the negative electrode terminal are configured to be electrically connected to the electrode assembly 10 to output electric energy generated by the electrode assembly 10.

In some other embodiments, the housing assembly 20 may alternatively be other structures. For example, the housing assembly 20 includes a housing 21 and two cover assemblies 22, where the housing 21 is a hollow structure with openings on two sides opposite each other, one cover assembly 22 correspondingly covers one opening of the housing 21 to form hermetical connection so as to form an accommodating cavity for accommodating the electrode assembly 10 and the electrolyte. In this structure, one cover assembly 22 may be provided with two electrode terminals 221 while the other cover assembly 22 is provided with no electrode terminal 221, or each of the two cover assemblies 22 is provided with one electrode terminal 221.

In the battery cell 7, one or more electrode assemblies 10 may be accommodated in the housing assembly 20. For example, in FIG. 4, there are four electrode assemblies 10.

The electrode assembly 10 includes a positive electrode member, a negative electrode member, and a separator. The electrode assembly 10 may be a wound electrode assembly. The positive electrode member, the negative electrode member, and the separator are all strip-shaped structures. In this embodiment of this application, the positive electrode member, the negative electrode member, and the negative electrode plate can be stacked in sequence and wound for more than two turns to form the electrode assembly 10.

From an appearance of the electrode assembly 10, the electrode assembly 10 includes an electrode member 8, and the electrode member 8 includes an electrode body 9 and a conductive structure 12 connected to the electrode body 9. For example, the conductive structure 12 extends from an end of the electrode body 9 closer to the cover assembly 22.

In some embodiments, there are two conductive structures 12, and the two conductive structures 12 are respectively defined as a positive electrode conductive structure and a negative electrode conductive structure. The positive electrode conductive structure and the negative electrode conductive structure may extend from the same end of the electrode body 9, or extend from two opposite ends of the electrode body 9 respectively.

The electrode body 9 is a core part of the electrode assembly 10 for achieving a charging/discharging function, and the conductive structure 12 is configured to output the currents generated by the electrode body 9. The electrode body 9 includes an insulating matrix, a conductive layer, and an active substance layer.

The conductive structure 12 is configured to be electrically connected to an electrode terminal 221. The conductive structure 12 may be directly connected to the electrode terminal through welding or the like, or may be indirectly connected to the electrode terminal 221 through another member. For example, the battery cell 7 further includes a current collecting member 13, where the current collecting member 13 is configured to be electrically connected to the electrode terminal 221 and the conductive structure 12. There are two current collecting members 13, and the two current collecting members 13 are respectively defined as a positive electrode current collecting member and a negative electrode current collecting member, the positive electrode current collecting member is configured to be electrically connected to the positive electrode terminal and the positive electrode conductive structure, and the negative electrode current collecting member is configured to be electrically connected to the negative electrode terminal and the negative electrode conductive structure.

It should be noted herein that at least one of the foregoing positive electrode member and negative electrode member uses a structure of the electrode member in any one of the following embodiments, that is, only the positive electrode member or the negative electrode member uses the structure of the following electrode member, or both the positive electrode member and the negative electrode member use the structure of the following electrode member. It should be noted that when both the positive electrode member and the negative electrode member use the structure of the following electrode member, polarities of the positive electrode member and the negative electrode member are opposite. For example, the positive electrode member uses the structure of the following electrode member, and the negative electrode member can use a structure of a conventional electrode member or the structure of the following electrode member.

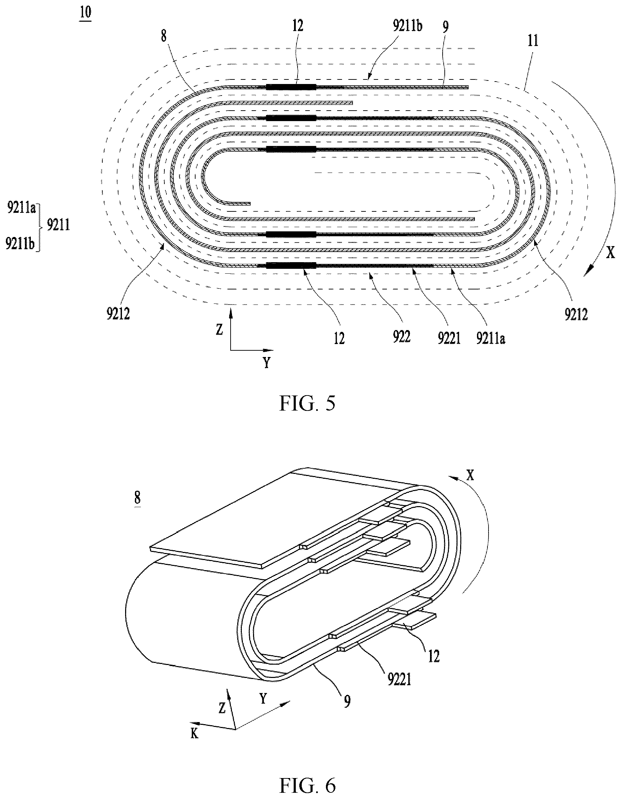

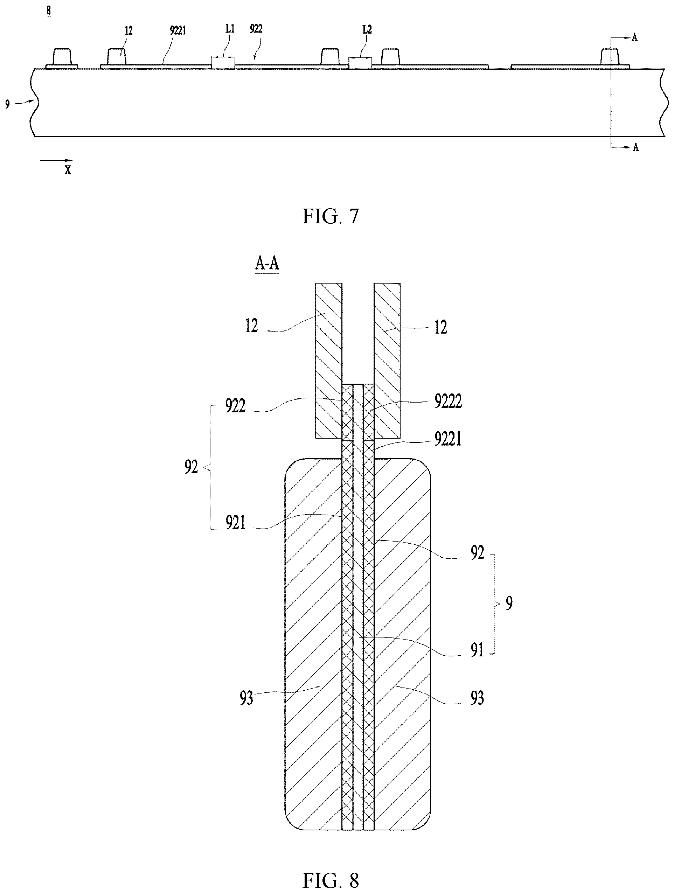

FIG. 5 is a schematic diagram of a cross section of an electrode assembly according to some embodiments of this application. FIG. 6 is a schematic structural diagram of an electrode assembly with an electrode member wound according to some embodiments of this application. FIG. 7 is a schematic structural diagram of an electrode assembly with an electrode member in an unfolded state according to some embodiments of this application. FIG. 8 is a cross-sectional diagram of an electrode member shown in FIG. 7 along line A-A.

As shown in FIG. 5 to FIG. 8, in some embodiments, the electrode assembly 10 includes an electrode member 8 wound along a winding direction X, where the electrode member 8 includes an electrode body 9, and the electrode body 9 includes an insulating matrix 91 and a conductive layer 92 disposed on the insulating matrix 91; the conductive layer 92 includes a first part 921 coated with an active substance layer 93 and a second part 922 uncoated with the active substance layer 93; the second part 922 is provided in a quantity of N, and the N second parts 922 are spaced apart in the winding direction X; and in the winding direction X, distance between the M^{th} and (M-1)^{th} second parts 922 is L1, and distance between the M^{th} and (M+1)^{th} second parts 922 is L2, where both N and M are positive integers, 2 ≤ M ≤ N-1, and 0.95 < L2/L1 < 1.05.

The direction X shown in FIG. 5 to FIG. 8 represents the winding direction of the electrode member 8, the winding direction X represents a direction of winding from inside to outside, a direction Y represents a width direction of the conductive structure 12, K represents a winding axis of the electrode member 8, and a direction Z represents a direction perpendicular to the winding axis of the electrode member 8.

The electrode assembly 10 is a wound electrode assembly. The electrode assembly 10 includes the electrode member 8, an electrode member with a polarity opposite to that of the electrode member 8, and a separator 11. The two electrode members are separated by the separator 11 and wound for more than two turns to form the electrode assembly 10.

The electrode member 8 includes an electrode body 9 and a conductive structure 12, the electrode body 9 is a core part of the electrode assembly 10 for achieving a charging/discharging function, and the conductive structure 12 is configured to output a current generated by the electrode body 9.

A material of the insulating matrix 91 includes one or more of a polymer material and a polymer matrix composite material. The polymer matrix composite material includes a polymer material and an additive, and the additive is at least one of an inorganic nonmetallic material and a metal material. The polymer material includes but is not limited to at least one of polyamide, polyimide, polyethylene glycol terephthalate, polybutylene terephthalate, or polyethylene naphthalate. The inorganic nonmetallic material includes one or more of carbon-based material, aluminum oxide, silicon dioxide, silicon nitride, silicon carbide, boron nitride, silicate, or titanium oxide. The metal material includes one or more of magnesium, calcium, strontium, lead, zinc, tin, antimony, bismuth, silver, or ruthenium.

The conductive layer 92 may be provided on only one side of the insulating matrix 91, or may be provided on two sides of the insulating matrix 91. The conductive layer 92 may be formed on the insulating matrix 91 via at least one of mechanical rolling, bonding, vapor deposition (vapor deposition), electroless plating (Electroless plating), and electroplating (electroplating). Optionally, vapor deposition and electroplating are used, that is, the conductive layer 92 is optionally a vapor deposition layer or an electroplating layer, so as to better achieve binding between the conductive layer 92 and the insulating matrix 91, and effectively exert support and protection effects of the insulating matrix 91 on the conductive layer 92.

The conductive structure 12 and the second part 922 may be connected via welding or bonding. For example, the conductive structure 12 may be connected to the second part 922 via ultrasonic welding or bonding using conductive adhesive. The conductive structure 12 can be provided on each of two sides of the second part 922. That is, one second part 922 corresponds to two conductive structures 12, and correspondingly, N second parts 922 correspond to 2N conductive structures 12.

In this embodiment of this application, along the winding direction X, distance between the M^{th} and (M-1)^{th} second parts 922 is L1, and distance between the M^{th} and (M+1)^{th} second parts 922 is L2, where 0.95 < L2/L1 < 1.05. During the charging/discharging process of the battery cell, when the active substance layer 93 shrinks or swells, because of the small difference between L1 and L2, forces applied by the insulating matrix 91 on two sides of the second part 922 are substantially the same, resulting in relatively balanced forces on the second part 922. This can ensure connection stability between the first part 921 and the second part 922, improve structural stability of the electrode assembly 10, and improve the current flow capacity and safety performance of the electrode assembly 10.

As shown in FIG. 5, in this embodiment of this application, the electrode member 8 is wound for a plurality of turns to form the electrode assembly 10, the wound electrode assembly 10 includes a flat region and a bending region, the flat region is parallel to a width direction Y of the conductive structure 12, and the bending region is located on two sides of the flat region.

In some embodiments, the first part 921 includes a connection portion 9211 and a transition portion 9212, the transition portion 9212 is located on two sides of the connection portion 9211, the connection portion 9211 is formed by extending along the width direction Y of the conductive structure 12, and at least part of the transition portion 9212 is arc-shaped; and the second part 922 is disposed on the connection portion 9211 and extends along the width direction Y of the conductive structure 12.

In this embodiment of this application, the second part 922 is disposed on the connection portion 9211, that is, the second part 922 is disposed in the flat region, and the conductive structure 12 connected to the second part 922 is also located in the flat region. The width direction Y of the conductive structure 12 is the same as an extending direction of the connection portion 9211, both being the direction Y

The second part 922 is disposed on the connection portion 9211, which can ensure that the conductive structures 12 connected to the second part 922 can be effectively welded when being stacked and connected, thereby improving the bonding force between adjacent conductive structures 12. The contact area between adjacent conductive structures 12 is increased, which can improve the current flow capacity. The second part 922 is not disposed on the transition part 9212, which can avoid the problem of stress concentration and prevent fracture of the second part 922 caused by stress concentration, thereby improving reliability of the second part 922. Correspondingly, the conductive structures 12 connected to the second part 922 are not disposed on the transition portion 9212, which can effectively prevent fracture of the conductive structure 12 caused by stress concentration, thereby improving reliability of the conductive structure 12.

Still referring to FIG. 5, in some embodiments, the connection portion 9211 includes a first connection portion 9211a and a second connection portion 9211b disposed opposite each other, and the first connection portion 9211a and the second connection portion 9211b are respectively disposed on the two sides of the winding axis K of the electrode member 8; and the second part 922 is disposed on the first connection portion 9211a and/or the second connection portion 9211b.

When the second part 922 is disposed on the first connection portion 9211a or the second connection portion 9211b while ensuring the current flow capacity of the conductive structure 12, a relatively small number of conductive structures 12 are connected to the second part 922, which can reduce thickness of the plurality of stacked conductive structures 12, thereby reducing space occupied by the conductive structures 12 and increasing energy density of the battery cell.

When the second parts 922 are disposed on the first connection portion 9211a and the second connection portion 9211b, the conductive structures 12 connected to the second parts 922 are also disposed on the first connection portion 9211a and the second connection portion 9211b. The increased number of conductive structures 12 can effectively improve overall conductivity of the plurality of conductive structures 12.

In some embodiments, the electrode member 8 in any one of the foregoing embodiments is used as the positive electrode member, which can significantly improve the current flow capacity and conductivity of the positive electrode conductive structure. Certainly, the electrode member 8 in any one of the foregoing embodiments can be used as the negative electrode member, which can also significantly improve the current flow capacity and conductivity of the negative electrode conductive structure.

Still referring to FIG. 5, in some embodiments, the electrode member 8 is used as one of the positive electrode member and the negative electrode member, the other of which is a conventional electrode member. A projection of the second part 922 of the electrode member 8 in a thickness direction Z of the conductive structure 12 at least partially overlaps with a projection of a first part of the conventional electrode member in the thickness direction Z of the conductive structure 12. The second part 922 of the electrode member 8 does not significantly increase the height of the electrode assembly 10, which can increase space occupancy in a height direction and facilitate improvement of the energy density of the battery cell. For example, the projection of the first conductive portion 9221 of the electrode member 8 in the direction Z at least partially or totally overlaps with the projection of the first part of the conventional electrode member in the direction Z. Arrangement of the first conductive portion 9221 does not increase the height of the electrode assembly 10, thereby facilitating improvement of the space occupancy.

As shown in FIG. 6, in some embodiments, the electrode member 8 is wound for a plurality of turns, and at least one second part 922 is disposed on each turn. In this embodiment of this application, the second part 922 is disposed on each turn, and the second part 922 is connected to the conductive structure 12, which can effectively use the accommodation space of the battery cell.

Still referring to FIG. 6, in some embodiments, two second parts 922 are disposed on each turn of the electrode member 8, and the two second parts 922 are respectively disposed on two sides of the winding axis K of the electrode member 8, two second parts 922 are disposed on each turn, and the two second parts 922 are respectively connected to the conductive structures 12, which can increase the number of conductive structures 12 and improve overall conductivity of the conductive structures 12.

In some embodiments, the electrode member 8 includes a conductive structure 12 connected to the second part 922, any one of N second parts 922 is connected to two conductive structures 12, 2N conductive structures 12 are disposed, and projections of the 2N conductive structures 12 at least partially overlap in a direction perpendicular to the winding axis K of the electrode member 8. Any two conductive structures 12 are stacked and connected to each other, which can improve the current flow capacity of the conductive structures 12.

As shown in FIG. 7 and FIG. 8, in some embodiments, the second part 922 includes a first conductive portion 9221 and a second conductive portion 9222, the first conductive portion 9221 is disposed between the second conductive portion 9222 and the first part 921, and along the winding direction X, the first conductive portion 9221 is larger than the second conductive portion 9222 in size. In this embodiment of this application, the size of the first conductive portion 9221 in the winding direction X is greater than the size of the second conductive portion 9222 in the winding direction X, so as to increase the connection area between the first part 921 and the second part 922, thereby improving the connection strength of the first part 921 and the second part 922, structural stability of the battery cell, and reliability of the battery cell. In addition, because thickness of the conductive layer 92 is small, the current flow area of the first part 921 and the second part 922 is small, which may cause severe heat generation in this region and seriously reduce performance of the battery cell. Increasing the size of the first conductive portion 9221 in the winding direction X can increase the current flow area of the conductive layer 92 at a joint of the first part 921 and the second part 922, thereby alleviating the heat generation in this region of the battery cell during usage and improving the performance of the battery cell.

In this embodiment of this application, the conductive structure 12 may be at least partially disposed on the second conductive portion 9222, and the conductive structure 12 and the second conductive portion 9222 may be connected via welding or bonding.

The N second parts 922 include N first conductive portions 9221, that is, each second part 922 includes one first conductive portion 9221, distance between the M^{th} and (M-1)^{th} first conductive portions 9221 in the N first conductive portions 9221 is L1, and distance between the M^{th} and (M+1)^{th} first conductive portions 9221 is L2, where 0.95 < L2/L1 < 1.05. The first conductive portion 9221 is configured to be connected to the first part 921 and the second conductive portion 9222, that is, the first conductive portion 9221 is directly connected to the insulating matrix 91. During the charging/discharging process of the battery cell, when the active substance layer 93 shrinks or swells, forces applied by the insulating matrix 91 on two sides of the first conductive portion 9221 are substantially the same, resulting in relatively balanced forces on the two sides of the first conductive portion 9221. This can ensure connection stability between the first conductive portion 9221 and the first part 921, improve structural stability of the electrode assembly 10, and improve the current flow capacity and safety performance of the electrode assembly 10.

In some embodiments, in the winding direction X, the first conductive portion 9221 shows a gradient increase in width. The first conductive portion 9221 shows a regular change, facilitating production and processing.

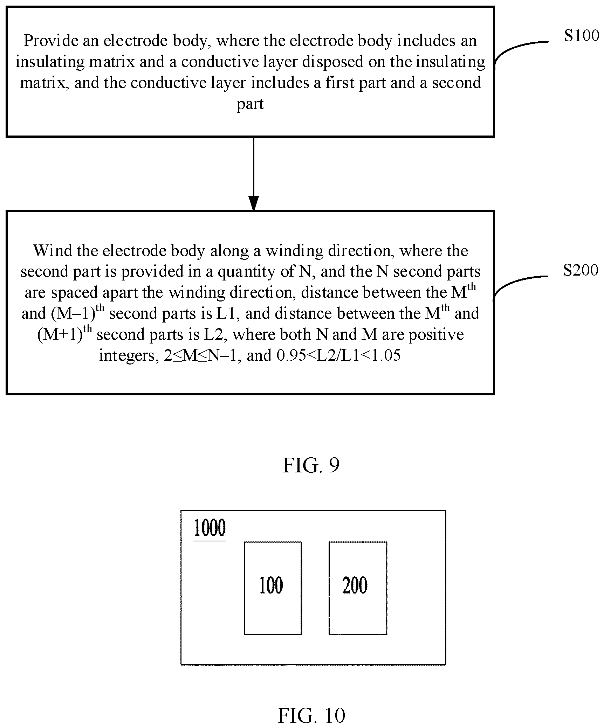

FIG. 9 is a schematic flowchart of a method for manufacturing electrode assembly according to some embodiments of this application.

As shown in FIG. 9, an embodiment of this application further provides a method for manufacturing electrode assembly including:
S100. Provide an electrode body, where the electrode body includes an insulating matrix and a conductive layer disposed on the insulating matrix, and the conductive layer includes a first part and a second part.
S200. Wind the electrode body along a winding direction.

The second part is provided in a quantity of N, and the N second parts are spaced apart in the winding direction, distance between the M^{th} and (M-1)^{th} second parts is L1, and distance between the M^{th} and (M+1)^{th} second parts is L2, where both N and M are positive integers, 2 ≤ M ≤ N-1, and 0.95 < L2/L1 < 1.05.

It should be noted that, for a related structure of the electrode assembly manufactured using the method for manufacturing electrode assembly, reference may be made to the electrode assembly provided in the foregoing embodiments.

In assembling an electrode assembly according to the foregoing method for manufacturing electrode assembly, it is not necessary to follow the foregoing steps in sequence. In other words, the steps may be performed in the order mentioned in the embodiments, or the steps may be performed in an order different from that mentioned in the embodiments, or several steps may be performed at the same time. For example, steps S100 and S200 are not executed in sequence, or may alternatively be executed simultaneously.

FIG. 10 is a schematic block diagram of a system for manufacturing electrode assembly according to some embodiments of this application.

As shown in FIG. 10, an embodiment of this application further provides a system for manufacturing electrode assembly. The manufacturing system 1000 includes: a first providing apparatus 100, configured to provide an electrode body, where the electrode body includes an insulating matrix and a conductive layer disposed on a surface of the insulating matrix, and the conductive layer includes a first part and a second part; and a winding apparatus 200, configured to wind the electrode body along a winding direction, where the second part is provided in a quantity of N, and the N second parts are spaced apart in the winding direction X, distance between the M^{th} and (M-1)^{th} second parts is L1, and distance between the M^{th} and (M+1)^{th} second parts is L2, where both N and M are positive integers, 2 ≤ M ≤ N-1, and 0.95 < L2/L1 < 1.05.

For a related structure of the electrode assembly manufactured in the foregoing manufacturing system, reference may be made to the electrode assembly provided in the foregoing embodiments.

Although this application has been described with reference to the preferred embodiments, various modifications can be made to this application without departing from the scope of this application and the components therein can be replaced with equivalents. In particular, as long as there is no structural conflict, the various technical features mentioned in the embodiments can be combined in any manner. This application is not limited to the specific embodiments disclosed in this specification, but includes all technical solutions falling within the scope of the claims.

## Claims

1. An electrode assembly, **characterized by** comprising an electrode member wound along a winding direction, wherein the electrode member comprises an electrode body, and the electrode body comprises an insulating matrix and a conductive layer disposed on the insulating matrix; and the conductive layer comprises a first part coated with an active substance layer and a second part coated with no active substance layer;
the second part is provided in a quantity of N, and the N second parts are spaced apart in the winding direction; and
in the winding direction, distance between the M^{th} and (M-1)^{th} second parts is L1, and distance between the M^{th} and (M+1)^{th} second parts is L2, wherein
both N and M are positive integers, 2 ≤ M ≤ N-1, and 0.95 < L2/L1 < 1.05.

2. The electrode assembly according to claim 1, **characterized in that**
the second part comprises a first conductive portion and a second conductive portion, the first conductive portion is disposed between the second conductive portion and the first part, and in the winding direction, the first conductive portion is larger than the second conductive portion in size.

3. The electrode assembly according to claim 2, **characterized in that** in the winding direction, the first conductive portion shows a gradient increase in size.

4. The electrode assembly according to any one of claims 1 to 3, **characterized in that** the electrode member is wound for a plurality of turns, and at least one second part is disposed on each turn.

5. The electrode assembly according to claim 4, **characterized in that**
two second parts are disposed on each turn of the electrode member, and the two second parts are respectively disposed on two sides of a winding axis of the electrode member.

6. The electrode assembly according to any one of claims 1 to 5, **characterized in that**
the electrode member comprises a conductive structure connected to the second part, any one of N second parts is connected to two conductive structures, 2N conductive structures are disposed, and projections of the 2N conductive structures at least partially overlap in a direction perpendicular to the winding axis of the electrode member.

7. The electrode assembly according to claim 6, **characterized in that**
the first part comprises a connection portion and a transition portion, wherein the transition portion is located on two sides of the connection portion, the connection portion is formed by extending in a width direction of the conductive structure, and at least part of the transition portion is arc-shaped; and
the second part is disposed on the connection portion and extends in the width direction of the conductive structure.

8. The electrode assembly according to claim 7, **characterized in that**
the connection portion comprises a first connection portion and a second connection portion disposed opposite each other, wherein the first connection portion and the second connection portion are respectively disposed on the two sides of the winding axis of the electrode member; and
the second part is disposed on the first connection portion and/or the second connection portion.

9. A battery cell, **characterized by** comprising the electrode assembly according to any one of claims 1 to 8 and a housing for accommodating the electrode assembly.

10. A battery, **characterized by** comprising a plurality of the battery cells according to claim 9.

11. An electric apparatus, **characterized by** comprising the battery according to claim 10, wherein the battery is configured to supply electric energy.

12. A method for manufacturing electrode assembly, **characterized by** comprising:
providing an electrode body, wherein the electrode body comprises an insulating matrix and a conductive layer disposed on the insulating matrix, and the conductive layer comprises a first part and a second part; and
winding the electrode body along a winding direction;
wherein the second part is provided in a quantity of N, and the N second parts are spaced apart in the winding direction, distance between the M^{th} and (M-1)^{th} second parts is L1, and distance between the M^{th} and (M+1)^{th} second parts is L2, wherein both N and M are positive integers, 2 ≤ M ≤ N-1, and 0.95 < L2/L1 < 1.05.

13. A system for manufacturing electrode assembly, **characterized by** comprising:
a first providing apparatus, configured to provide an electrode body, wherein the electrode body comprises an insulating matrix and a conductive layer disposed on a surface of the insulating matrix, and the conductive layer comprises a first part and a second part; and
a winding apparatus, configured to wind the electrode body along a winding direction;
wherein the second part is provided in a quantity of N, and the N second parts are spaced apart in the winding direction, distance between the M^{th} and (M-1)^{th} second parts is L1, and distance between the M^{th} and (M+1)^{th} second parts is L2, wherein both N and M are positive integers, 2 ≤ M ≤ N-1, and 0.95 < L2/L1 < 1.05.
